# EUROPEAN PATENT SPECIFICATION

(11) **EP 3 780 743 B1**
(45) Date of publication and mention of the grant of the patent: **30.03.2022**
(21) Application number: 18914216.9
(22) Date of filing: 13.04.2018
(51) Int. Cl.: H04W 40/02, H04W 48/18, H04W 28/02

(54) **METHOD AND DEVICE FOR ESTABLISHING TRANSMISSION PATH**
VERFAHREN UND VORRICHTUNG ZUR BESTIMMUNG DES ÜBERTRAGUNGSWEGS
PROCÉDÉ ET DISPOSITIF POUR ÉTABLIR UN TRAJET DE TRANSMISSION

(43) Date of publication of application: 17.02.2021
(73) Proprietor: GUANGDONG OPPO MOBILE TELECOMMUNICATIONS CORP., LTD., Wusha, Chang'an Dongguan Guangdong 523860 (CN)
(72) Inventor: LIU, Jianhua, Dongguan, Guangdong 523860 (CN)
(74) Representative: Rossi, Ugo
(86) International application number: PCT/CN2018/082922
(87) International publication number: WO 2019/196078

(56) References cited:
- WO-A1-2018/059515
- CA-A1- 3 025 961
- CN-A- 103 415 059
- CN-A- 104 322 082
- CN-A- 107 484 224
- INTERDIGITAL INC: "Solution Update: Infrequent small data transmission with no PDU session available", 3GPP DRAFT; S2-183555__CIOT_SOLUTION_UPDATE_KI1_SMALL DATA WITHOUT PDU SESSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. SA WG2, no. Sanya, China; 20180416 - 20180420 9 April 2018 (2018-04-09), XP051437487, Retrieved from the Internet: URL:http://www.3gpp.org/ftp/tsg%5Fsa/WG2%5 FArch/TSGS2%5F127%5FSanya/Docs/ [retrieved on 2018-04-09]
- "3rd Generation Partnership Project; Technical Specification Group Services and System Aspects; Study on Cellular IoT support and evolution for the 5G System (Release 16)", 3GPP STANDARD; TECHNICAL REPORT; 3GPP TR 23.724, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.2.0, 14 March 2018 (2018-03-14), pages 1-64, XP051450431, [retrieved on 2018-03-14]

## Description

### Technical Field

Embodiments of the present application relate to the communication field, and more specifically to a method for establishing a transmission path, and a device.

### Background

In a future communication system, there will be a large number of Internet of things (IoT) devices which exist in a network. When small data needs to be transmitted to these IoT devices, small data may be encapsulated into a Non Access Stratum (NAS) Protocol Data Unit (PDU) for transmission by establishing a PDU session connection. However, when no PDU Session connection exists, how to transmit these small data becomes an urgent problem to be solved.

Related technologies are known from patent document CA3025961A1, 3GPP DRAFT S2-183555 and 3GPP TR 23.274, V0.2.0, 14 March 2018.

### Summary

Embodiments of the present application provide a method for establishing a transmission path, and a device, which can achieve data transmission, in a case that no PDU session connection is established. The invention is set out in the appended set of claims. It should be noted that embodiments of the invention are those whose scope is within that of the appended claims, and the implementations disclosed in this disclosure which do not fall under the scope of the appended claims are to be considered as examples for illustration.

In a first aspect, a method for establishing a transmission path is provided, including: receiving, by a first core network device, a first request message, wherein the first request message is used for requesting the first core network device to serve as a transmission node of a target transmission path to be established which is based on a non-Protocol Data Unit (non-PDU) session connection; and determining, by the first core network device, whether to serve as the transmission node of the target transmission path.

Therefore, a terminal device sends a request message to a core network device to register on different core network devices. A registered core network device serves as a transmission node of the target transmission path, so that the terminal device still can perform data transmission through the target transmission path, i.e. through these registered transmission nodes, in a case that no PDU session connection exists.

Herein, determining, by the first core network device, whether to serve as the transmission node of the target transmission path, includes: if the target transmission path satisfies at least one of following conditions, determining, by the first core network device, to serve as the transmission node of the target transmission path: a target network slice applied by the target transmission path is a network slice subscribed by a terminal device, an external server applied by the target transmission path is an external server subscribed by the terminal device, and an external service function applied by the target transmission path is an external service function subscribed by the terminal device.

In combination with the first aspect or any one of the above possible implementations, in another possible implementation of the first aspect, the method further includes: obtaining, by the first core network device from a Unified Data Management (UDM) or a Network Slice Selection Function (NSSF), information of a network slice subscribed by the terminal device, information of an external server subscribed by the terminal device, and information of an external service function subscribed by the terminal device.

In combination with the first aspect or any one of the above possible implementations, in another possible implementation of the first aspect, if the first core network device determines to serve as the transmission node of the target transmission path, the method further includes: selecting, by the first core network device, a second core network device; sending, by the first core network device, a second request message to the second core network device, wherein the second request message is used for requesting the second core network device to serve as a transmission node of the target transmission path to be established.

In combination with the first aspect or any one of the above possible implementations, in another possible implementation of the first aspect, selecting, by the first core network device, the second core network device, includes: selecting, by the first core network device, the second core network device according to the first request message, wherein the first request message carries at least one of: information of a target network slice applied by the target transmission path, Data Network Name (DNN) information of the terminal device, and service network identification information of the terminal device.

In combination with the first aspect or any one of the above possible implementations, in another possible implementation of the first aspect, selecting, by the first core network device, the second core network device, includes: selecting, by the first core network device, the second core network device according to a local configuration of the first core network device, and/or the subscription information of the terminal device.

Optionally, the subscription information of the terminal device includes at least one of: information of a network slice subscribed by the terminal device, information of an external server subscribed by the terminal device, and information of an external service function subscribed by the terminal device, and the local configuration of the first core network device includes information of a second core network device capable of communicating with the first core network device.

In combination with the first aspect or any one of the above possible implementations, in another possible implementation of the first aspect, receiving, by the first core network device, the first request message, includes: receiving, by the first core network device, the first request message sent by a terminal device.

In combination with the first aspect or any one of the above possible implementations, in another possible implementation of the first aspect, the method further includes: sending, by the first core network device after receiving downlink data transmitted through the target transmission path, the downlink data to the terminal device.

In combination with the first aspect, receiving, by the first core network device, the first request message, includes: receiving, by the first core network device, the first request message sent by a third core network device.

In combination with the first aspect, the method further includes: after receiving downlink data transmitted through the target transmission path, sending, by the first core network device, the downlink data to the terminal device through the third core network device.

In combination with the first aspect or any one of the above possible implementations, in another possible implementation of the first aspect, before sending, by the first core network device, the downlink data to the terminal device through the third core network device, the method further includes: obtaining, by the first core network device, information of the third core network device, and determining the third core network device according to the information of the third core network device.

In combination with the first aspect or any one of the above possible implementations, in another possible implementation of the first aspect, obtaining, by the first core network device, the information of the third core network device, includes: obtaining, by the first core network device, the information of the third core network device from a UDM device; or, obtaining, by the first core network device, the information of the third core network device stored in the first core network device.

In combination with the first aspect or in any above possible implementation, in another possible implementation of the first aspect, the method further includes: sending, by the first core network device, a response message aiming at the first request message, wherein the response message is used for indicating whether an establishment of the target transmission path is completed.

In combination with the first aspect or any one of the above possible implementations, in another possible implementation of the first aspect, the third core network device is any one of: an Access and Mobility Management Function (AMF) device, a Session Management Function (SMF) device, a User Plane Function (UPF) device, a device provided with an SMF and a UPF in combination, and a gateway connected to an external network element.

In combination with the first aspect or any one of the above possible implementations, in another possible implementation of the first aspect, the second core network device is any one of: an AMF device, an SMF device, a UPF device, a device provided with an SMF and a UPF in combination, and a gateway connected to an external network element.

In combination with the first aspect or any one of the above possible implementations, in another possible implementation of the first aspect, the first core network device is any one of: an AMF device, an SMF device, a UPF device, a device provided with an SMF and a UPF in combination, and a gateway connected to an external network element.

The following aspect is not according to the invention and is present for illustration purposes only. In a second aspect, a method for establishing a transmission path is provided, including: sending, by a terminal device, a first request message to a first core network device, wherein the first request message is used for requesting the first core network device to serve as a transmission node of a target transmission path to be established which is based on a non-Protocol Data Unit (non-PDU) session connection.

Therefore, a terminal device sends a request message to a core network device to register on different core network devices. A registered core network device serves as a transmission node of the target transmission path, so that the terminal device still can perform data transmission through the target transmission path, i.e. through these registered transmission nodes, in a case that no PDU session connection exists.

In combination with the second aspect, in a possible implementation of the second aspect, the first request message carries at least one ofn: information of a target network slice applied by the target transmission path, Data Network Name (DNN) information of the terminal device, and service network identification information of the terminal device.

In combination with the second aspect or any of the above possible implementations, in another possible implementation of the second aspect, the method further includes: receiving, by the terminal device, a response message sent by the first core network device, wherein the response message is used for indicating whether an establishment of the target transmission path is completed.

In combination with the second aspect or any one of the above possible implementations, in another possible implementation of the second aspect, the method further includes: receiving, by the terminal device, downlink data sent by the first core network device and transmitted through the target transmission path.

In combination with the second aspect or any one of the above possible implementations, in another possible implementation of the second aspect, the first core network device is any one of: an Access and Mobility Management Function (AMF) device, a Session Management Function (SMF) device, a User Plane Function (UPF) device, a device provided with an SMF and a UPF in combination, and a gateway connected to an external network element.

In a third aspect, a core network device is provided, which may perform operations of the core network device in the first aspect or any optional implementation of the first aspect. Specifically, the core network device may include a first core network device used for performing the first aspect or in any possible implementation of the first aspect.

The following aspect is not according to the invention and is present for illustration purposes only. In a fourth aspect, a terminal device is provided, which may perform operations of the terminal device in the second aspect or any optional implementation of the second aspect. Specifically, the terminal device may include a terminal device used for performing the second aspect or in any possible implementation of the second aspect.

The following aspect is not according to the invention and is present for illustration purposes only. In a fifth aspect, a core network device is provided, including: a processor, a transceiver, and a memory. The processor, the transceiver, and the memory communicate with each other through an internal connection path. The memory is used for storing instructions, and the processor is used for executing the instructions stored in the memory. When the processor executes the instructions stored in the memory, the execution enables the core network device to perform the method in the first aspect or any possible implementation of the first aspect, or the execution enables the core network device to implement the first core network device provided in the third aspect.

The following aspect is not according to the invention and is present for illustration purposes only. In a sixth aspect, a terminal device is provided, including: a processor, a transceiver, and a memory. The processor, the transceiver, and the memory communicate with each other through an internal connection path. The memory is used for storing instructions, and the processor is used for executing the instructions stored in the memory. When the processor executes the instructions stored in the memory, the execution enables the terminal device to execute the method in the second aspect or any possible implementation of the second aspect, or the execution enables the terminal device to implement the terminal device provided in the fourth aspect.

The following aspect is not according to the invention and is present for illustration purposes only. In a seventh aspect, a system chip is provided, including an input interface, an output interface, a processor, and a memory, wherein the processor is used for executing instructions stored in the memory, and when the instructions are executed, the processor may implement the method in the aforementioned first aspect or any possible implementation of the first aspect.

The following aspect is not according to the invention and is present for illustration purposes only. In an eighth aspect, a system chip is provided, including an input interface, an output interface, a processor, and a memory, wherein the processor is used for executing instructions stored in the memory, and when the instructions are executed, the processor may implement the method in the aforementioned second aspect or any possible implementation of the second aspect.

The following aspect is not according to the invention and is present for illustration purposes only. In a ninth aspect, a computer program product including instructions is provided, which enables, when the computer program product runs on a computer, the computer to perform the method in the first aspect or any possible implementation of the first aspect.

The following aspect is not according to the invention and is present for illustration purposes only. In a tenth aspect, a computer program product including instructions is provided, which enables, when the computer program product runs on a computer, the computer to perform the method in the second aspect or any possible implementation of the second aspect.

### Brief Description of Drawings

FIG. 1 is a schematic diagram of a possible wireless communication system applied in an embodiment of the present application.
FIG. 2 is a schematic flow chart of a method for establishing a transmission path according to an embodiment of the present application.
FIG. 3 is a flow interaction chart of a method for establishing a transmission path according to an embodiment of the present application.
FIG. 4 is a schematic flow chart of a method for establishing a transmission path according to an embodiment of the present application.
FIG. 5 is a schematic block diagram of a core network device according to an embodiment of the present application.
FIG. 6 is a schematic block diagram of a terminal device according to an embodiment of the present application.
FIG. 7 is a schematic diagram of a structure of a communication device according to an embodiment of the present application.
FIG. 8 is a schematic diagram of a structure of a system chip according to an embodiment of the present application.

### Detailed Description

Technical solutions of the embodiments of the present application may be applied to various communication systems, such as, a Global System of Mobile communication (GSM) system, a Code Division Multiple Access (CDMA) system, a Wideband Code Division Multiple Access (WCDMA) system, a General Packet wireless Service (GPRS) system, a Long Term Evolution (LTE) system, a LTE Frequency Division Duplex (FDD) system, a LTE Time Division Duplex (TDD) system, a Universal Mobile Telecommunication System (UMTS) system, a Worldwide Interoperability for Microwave Access (WiMAX) communication system, or a future 5G system.

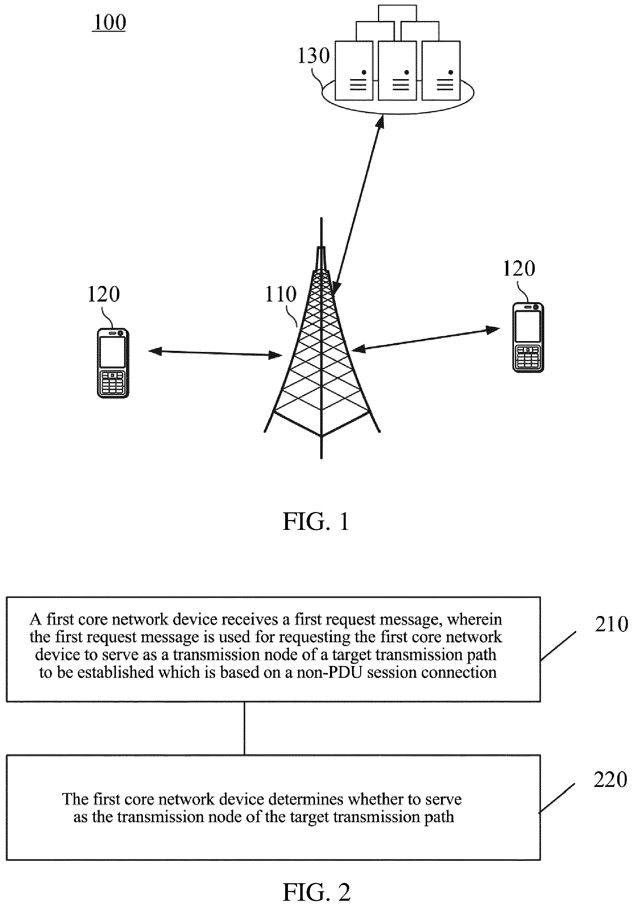

FIG. 1 shows a wireless communication system 100 to which an embodiment of the present application is applied. The wireless communication system 100 may include an access network device 110. The access network device 110 may be a device that communicates with a terminal device. The access network device 110 may provide communication coverage for a specific geographic area and may communicate with terminal devices (e.g., UE) located within the coverage area. Optionally, the access network device 110 may be a Base Transceiver Station (BTS) in a GSM system or a CDMA system, a NodeB (NB) in a WCDMA system, an Evolutional Node B (eNB or eNodeB) in an LTE system, or a radio controller in a Cloud Radio Access Network (CRAN), or the access network device 110 may be a relay station, an access point, an on-board device, a wearable device, a network-side device in a future 5G network, or a network device in a future evolved Public Land Mobile Network (PLMN), etc. The access network device 110 may be an Evolved Universal Terrestrial Radio Access Network (E-UTRAN) or a Next Generation Radio Access Network (NG-RAN).

The wireless communication system 100 may also include a core network device 130 which communicates with an access network device. Optionally, the core network device 130 may be an Evolved Packet Core (EPC) of an LTE network; it may also be a 5G core network device (5G Core, 5GC), e.g., an Access and Mobility Management Function (AMF) or a Session Management Function (SMF). Optionally, the core network device 130 may be an Evolved Packet Core (EPC) device of the LTE network, e.g., a Session Management Function + Core Packet Gateway (SMF+PGW-C) device. It should be understood that the SMF+PGW-C may simultaneously achieve functions which the SMF and the PGW-C can achieve.

The wireless communication system 100 may also include at least one terminal device 120 located within a coverage area of the network device 110. The terminal device 120 may be mobile or fixed. Optionally, the terminal device 120 may be referred to an access terminal, a user equipment (UE), a subscriber unit, a subscriber station, a mobile station, a mobile platform, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device, or another processing device connected to a wireless modem, an on-board device, a wearable device, a terminal device in a future 5G network, or a terminal device in a future evolved Public Land Mobile Network (PLMN), or the like.

FIG. 1 exemplifies one access network device, one core network device, and two terminal devices. Optionally, the wireless communication system 100 may include multiple access network devices, and another number of terminal devices may be included within a coverage area of each access network device, which is not limited by the embodiment of the present application. Optionally, the wireless communication system 100 may also include another network entity such as a Mobile Management Entity (MME), a Unified Data Management (UDM), an Authentication Server Function (AUSF), a User Plane Function (UPF), a Signaling Gateway (SGW), which is not limited by the embodiment of the present application. In addition, the terms "system" and "network" are often used interchangeably herein. The term "and/or" in this document is merely an association relationship describing associated objects, indicating that there may be three relationships, for example, A and/or B may indicate three situations: A alone, A and B, and B alone. In addition, the symbol "/" in this document generally indicates that objects of the former and the latter connected by "/" has an "or" relationship.

FIG. 2 shows a schematic flow chart of a method 200 for establishing a transmission path according to an embodiment of the present application. The method 200 shown in FIG. 2 may be performed by a first core network device, which may be, for example, the core network device 130 in FIG. 1. As shown in FIG. 2, the method 200 includes part or all of following contents.

In 210, a first core network device receives a first request message.

The first request message is used for requesting the first core network device to serve as a transmission node of a target transmission path to be established which is based on a non-PDU session connection.

In 220, the first core network device determines whether to serve as a transmission node of the target transmission path.

Specifically, the first core network device receives the first request message, the first request message is used for requesting an establishment of a target transmission path based on a non-PDU session connection and requesting the first core network device to serve as one transmission node in the target transmission path. The target transmission path may be used for transmitting downlink data of a terminal device, for example, a data packet encapsulated as a NAS PDU is transmitted to the terminal device. After the first core network device receives the first request message, the first core network device determines whether to serve as the transmission node of the target transmission path.

The first request message may be, for example, a Registration Request message used for requesting registration of a terminal device on the first core network device. A core network device on which the terminal device has been registered may form one transmission path, i.e., the target transmission path, so that data may be transmitted to the terminal device through these registered core network devices. In other words, the first core network device serving as the transmission node of the target transmission path, is achieved through completing, by the terminal device, registration on the first core network device, wherein completing, by the terminal device, the registration on the first core network device represents that the first core network device agrees to serve as the transmission node of the target transmission path.

Optionally, the first core network device is any one of following devices: an AMF device, an SMF device, a UPF device, a device provided with an SMF and a UPF in combination, and a gateway connected to an external network element.

In 220, the first core network device determines whether to serve as the transmission node of the target transmission path, including: if the target transmission path satisfies at least one of following conditions, the first core network device determines to serve as the transmission node of the target transmission path: a target network slice applied by the target transmission path is a network slice subscribed by a terminal device, an external server applied by the target transmission path is an external server subscribed by the terminal device, and an external service function applied by the target transmission path is an external service function subscribed by the terminal device.

When requesting an establishment of a target transmission path based on a non-PDU session connection through the first request message, the establishment of the target transmission path may be requested aiming at a specific network slice request, then the network slice applied by the target transmission path is the specific network slice. The target transmission path may be established, only when the specific network slice is the network slice subscribed by the terminal device. Therefore, after receiving the first request message, the first core network device will verify whether the target network slice is the network slice subscribed by the terminal device.

Of course, the establishment of the target transmission path may be requested aiming at a specific external server. At this time, the external server applied by the target transmission path is the specific external server. The target transmission path is established only when the specific external server is the external server subscribed by the terminal device. Therefore, after receiving the first request message, the first core network device will verify whether the external server is the external server subscribed by the terminal device.

Or, the establishment of the target transmission path may also be requested aiming at a specific external service function. At this time, the external service function applied by the target transmission path is the specific external service function. The target transmission path is established, only when the specific external service function is the external service function subscribed by the terminal device. Therefore, after receiving the first request message, the first core network device will verify whether the external service function is the external service function subscribed by the terminal device.

If the requested target network slice and/or the external server (the external service function) are allowed, the first core network device determines that the target transmission path aiming at the external server (the external service function) may be established on the target network slice, and the first core network device may serve as one transmission node of the target transmission path; if the requested target network slice and/or the external server (the external service function) are not allowed, the first core network device determines that the target transmission path aiming at the external server (the external service function) cannot be established on the target network slice, and the first core network device will not serve as a transmission node of the target transmission path also.

Optionally, the first core network device may acquire information of a network slice subscribed by the terminal device, information of an external server subscribed by the terminal device, and information of an external service function subscribed by the terminal device from a UDM device or a Network Slice Selection Function (NSSF) device.

That is, the first core network may acquire information of an allowed network slice of the terminal device from the NSSF device, or acquire subscription information of the terminal device from the UDM device, wherein the subscription information includes information of a network slice subscribed by the terminal device, information of an external server subscribed by the terminal device, information of an external service function subscribed by the terminal device, etc.

Optionally, in 220, if the first core network device determines to serve as the transmission node of the target transmission path, the method further includes: in 230, the first core network device selects a second core network device.

In 240, the first core network device sends a second request message to the second core network device.

The second request message is used for requesting the second core network device to serve as a transmission node of the target transmission path to be established.

The second request message may be, for example, a Registration Request message used for requesting registration of a terminal device on the second core network device. A core network device on which a terminal device has been registered may form one transmission path, i.e., the target transmission path, so that data may be transmitted to the terminal device through these registered core network devices.

Optionally, the second core network device is any one of following devices: an AMF device, an SMF device, a UPF device, a device provided with an SMF and a UPF in combination, and a gateway connected to an external network element.

Specifically, when the first core network device determines that the target transmission path may be established and the first core network device serves as the transmission node of the target transmission path, it may also continue to find a next transmission node of the target transmission path, for example, the second core network device here is a selected next transmission node. After selecting the second core network device, the first core network device sends second request information to the second core network device to request the second core network device to serve as a transmission node of the target transmission path.

If the second core network device also agrees to serve as the transmission node of the target transmission path, the target transmission path at least includes two transmission nodes: the first core network device and the second core network device.

Further, if another core network device is needed in the target transmission path, the second core network device may also send a request message to another core network device to request another core network device to serve as a transmission node of the target transmission path, at which time it is also possible that the target transmission path includes another core network device which is requested.

Optionally, a transmission node in the target transmission path, such as the first core network device and the second core network device, may send its own information to the UDM device after completing an establishment of the transmission node, so that the UDM device stores information of the target transmission path, i.e., information of various transmission nodes in the target transmission path.

Optionally, in 230, the first core network device selects the second core network device, including: the first core network device selects the second core network device according to the first request message.

The first request message carries at least one of following pieces of information: information of a target network slice applied by the target transmission path, Data Network Name (DNN) information of the terminal device, and service network identification information of the terminal device.

If the first request message carries the information of the target network slice applied by the target transmission path, the first core network device may select the second core network device according to the information of the target network slice carried in the received first request message. The second core network device selected by the first core network device should support the target network slice carried in the first request message.

If the first request message carries DNN information of the terminal device, the first core network device may select the second core network device according to the DNN information carried in the received first request message. The second core network device selected by the first core network device should support communication with an external network indicated by the DNN information.

If the first request message carries service network identification information of the terminal device, the first core network device may select the second core network device according to the service network identification information carried in the received first request message. The second core network device selected by the first core network device should support communication with a service network indicated by the service network identification information.

Optionally, in 230, the first core network device selects the second core network device, including: the first core network device selects the second core network device according to a local configuration of the first core network device, and/or subscription information of the terminal device.

The subscription information of the terminal device includes at least one of following pieces of information: information of a network slice subscribed by the terminal device, information of an external server subscribed by the terminal device, and information of an external service function subscribed by the terminal device.

Optionally, the local configuration of the first core network device includes information of the second core network device capable of communicating with the first core network device.

If the first request message does not carry information such as the information of the target network slice applied by the target transmission path, the Data Network Name (DNN) information of the terminal device, and the service network identification information of the terminal device, the first core network device may select the second core network device according to the local configuration of the first core network device, and/or the subscription information of the terminal device.

The local configuration of the first core network device includes information of the second core network device capable of communicating with the first core network device, and the first core network device may select the second core network device for establishing the target transmission path from core network devices capable of communicating with the first core network device, thereby sending the second request message to the selected second core network device.

When the subscription information of the terminal device includes the information of the network slice subscribed by the terminal device, for some terminal devices, there may be only one network slice, that is, the target network slice, subscribed by the terminal device, then at this time the first request information is not needed to carry the information of the target network slice again, and the first core network device can obtain the network slice applied by the target transmission path requested by the first core network device to be established from the subscription information of the terminal device.

Similarly, when the subscription information of the terminal device includes information of an external server subscribed by the terminal device and/or information of an external service function subscribed by the terminal device, for some terminal devices, there may be only one external server and/or external service function subscribed by the terminal device, then at this time the first request information is not needed to carry the information of the external server and/or the external service function, and the first core network device can obtain the external server and/or the external service function applied by the target transmission path requested by the first core network device to be established from the subscription information of the terminal device.

In 210, the first core network device receives the first request message sent by the terminal device.

Correspondingly, in 220, after receiving downlink data transmitted through the target transmission path, the first core network device sends the downlink data to the terminal device.

For example, after the terminal device has sent the first request message to the first core network device, the first core network device agrees to establish the target transmission path and serve as a transmission node of the target transmission path, and has sent the second request message to the second core network device, and the second core network device also agrees to serve as a transmission node of the target transmission path, if no other core network device is needed, an establishment of the target transmission path is completed, wherein the target transmission path includes the first core network device and the second core network device. When downlink data arrives, the second core network device sends, according to a device identification of the terminal device and a network slice corresponding to the downlink data, the downlink data to the first core network device in the target transmission path applied to the same network slice, and the first core network device sends the downlink data to the terminal device.

In 210, the first core network device receives the first request message sent by the third core network device.

Optionally, the third core network device is any one of following devices: an AMF device, an SMF device, a UPF device, a device provided with an SMF and a UPF in combination, and a gateway connected to an external network element.

Correspondingly, in 220, after receiving downlink data transmitted through the target transmission path, the first core network device sends the downlink data to the terminal device through the third core network device.

For example, the terminal device has sent the first request message to the third core network device, the third core network device agrees to establish the target transmission path and serve as a transmission node of the target transmission path, and has sent the first request message to the first core network device, and the first core network device also agrees to serve as a transmission node of the target transmission path. If no other core network device is needed, an establishment of the target transmission path is completed, wherein the target transmission path includes the third core network device and the first core network device. When downlink data arrives, the first core network device sends, according to a device identification of the terminal device and a network slice corresponding to the downlink data, the downlink data to the third core network device in the target transmission path applied to the same network slice, and the third core network device sends the downlink data to the terminal device. If another core network device is still needed after the first core network device agrees to serve as the transmission node of the target transmission path, the first core network device may also send a second request message to the second core network device. If the second core network device also agrees to serve as the transmission node of the target transmission path, the target transmission path includes the third core network device, the first core network device, and the second core network device. When downlink data arrives, the downlink data is sent to the terminal device sequentially through the second network device, the first network device, and the third network device.

Before the first core network device sends the downlink data to the terminal device through the third core network device, the method further includes: the first core network device acquires information of the third core network device and determines the third core network device according to the information of the third core network device.

The first core network device may acquire the information of the third core network device from the UDM device; or, the first core network device acquires the information of the third core network device stored in the first core network device.

For example, after the first core network device determines to serve as the transmission node of the target transmission path, it may send registration information of the terminal device to the UDM device. After a UDM receives registration information of the terminal device sent by each transmission node on the target transmission path, it saves these pieces of information, which is equivalent to recording the information of various transmission nodes in the target transmission path. During performing data transmission, each core network device may acquire the information of various transmission nodes in the target transmission path from the UDM, thus the each core network device may address the next core network device when receiving downlink data and send the downlink data to the next core network device.

For another example, after the first core network device determines to serve as the transmission node of the target transmission path, it may record the information of the third core network device which sends the first request message to the first core network device, so that when receiving downlink data, it knows that the downlink data needs to be sent to the third core network device.

It should be understood that the terminal device may request establishments of different target transmission paths aiming at different network slices. The UDM device may save the target transmission path corresponding to each network slice. For example, the target transmission path 1 is applied to a network slicing of an IoT service, including AMF1 and SMF1; the target transmission path 2 is applied to a network slice of an Enhance Mobile Broadband (eMBB) service, including the AMF1 and SMF2; the target transmission path 3 is applied to a network slice of an Ultra Reliable &Low Latency Communication (URLLC) service, including AMF2 and SMF3.

Optionally, after 220, the method further includes: the first core network device sends a response message aiming at the first request message, wherein the response message is used for indicating whether an establishment of the target transmission path is completed.

If the first core network device does not agree to serve as the transmission node of the target transmission path, the first core network device may respond to the terminal device or the third core network device, and the response message indicates that the establishment of the target transmission path fails; if the first core network device agrees to serve as the transmission node of the target transmission path and at this point the establishment of the target transmission path is completed, the first network device responds aiming at the first request message, and the response message indicates that the establishment of the target transmission path is completed; if the first core network device agrees to serve as the transmission node of the target transmission path and sends a second request message to the second core network device, then when the second core network device does not agree to serve as the transmission node of the target transmission path, it will send a response message which indicates that the establishment of the target transmission path fails to the first core network device, and thus the first core network device sends a response message which indicates that the establishment of the target transmission path fails to the third core network device or the terminal device. When the second core network device agrees to serve as the transmission node of the target transmission path, it will send a response message which indicates that the establishment of the target transmission path is completed to the first core network device, and thus the first core network device sends a response message which indicates that the establishment of the target transmission path is completed to the third core network device or the terminal device.

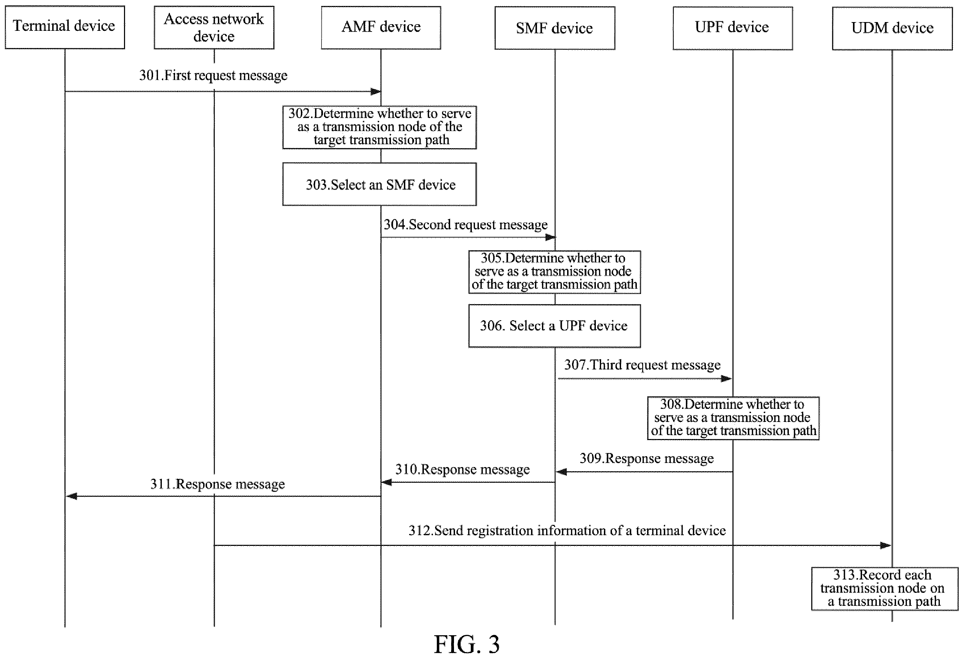

The following embodiment is not according to the invention and is present for illustration purposes only. With reference to FIG. 3, a method for establishing a transmission path according to an embodiment of the present application will be described by way of example below. A terminal device, an access network device, an AMF device, an SMF device, an SMF device, a UPF device and a UDM device are shown in FIG. 3.

In 301, the terminal device sends the first request message to the AMF device through the access network device.

The first request message is used for requesting the AMF device to serve as a transmission node of a target transmission path to be established which is based on a non-PDU session connection. The first request message is, for example, a registration request requesting registration of a terminal device on the first core network device.

The first request message may, for example, carry at least one of information of a target network slice applied by the target transmission path, DNN information of the terminal device, and service network identification information of the terminal device.

In 302, after receiving the first request message, the AMF device determines whether to serve as the transmission node of the target transmission path.

For example, when the first request message carries the information of the target network slice applied by the target transmission path, the AMF device may judge whether the target network slice applied by the target transmission path is an allowed network slice of the terminal device, that is, a network slice subscribed by the terminal device, according to the first request message. If the target network slice is the network slice subscribed by the terminal device, the first core network device determines that it may serve as the transmission node of the target transmission path.

In 303, if the AMF device determines to serve as the transmission node of the target transmission path, the AMF device selects an SMF device.

The AMF device may select the SMF device according to information carried by the first request message.

For example, when the first request message carries information of a target network slice applied by the target transmission path, the AMF device may select the SMF device which supports the target network slice.

For another example, when the first request message carries DNN information of the terminal device, the SMF device selected by the AMF device needs to support an external network indicated by the DNN information.

For another example, when the first request message carries service network identification information of the terminal device, the SMF device selected by the AMF device needs to support a service network indicated by the service network identification information.

Or, when the first request message does not carry the information of the target network slice, the DNN information or the service network identification information, the AMF device may select the SMF device according to a local configuration of the AMF device, and/or subscription information of the terminal device.

For example, when the terminal device supports only one type of network slice, a network slice subscribed in the subscription information of the terminal device is the target network slice applied by the target transmission path. The AMF device can acquire the target network slice according to the subscription information of the terminal device and select the SMF device which supports the target network slice.

In 304, the AMF device sends a second request message to the SMF device.

The second request message is used for requesting the SMF device to serve as a transmission node of the target transmission path to be established. The second request message is, for example, a registration request requesting registration of a terminal device on the second core network device.

The second request message may, for example, carry at least one of information of a target network slice applied by the target transmission path, DNN information of the terminal device, and service network identification information of the terminal device.

In 305, after receiving the second request message, the SMF device determines whether to serve as the transmission node of the target transmission path.

In 306, if the SMF device determines to serve as the transmission node of the target transmission path, the SMF device selects a UPF device.

The SMF device may select the UPF device according to the information carried by the first request message.

For example, when the second request message carries information of a target network slice applied by the target transmission path, the SMF device may select the UPF device which supports the target network slice.

For another example, when the second request message carries DNN information of the terminal device, the UPF device selected by the SMF device needs to support an external network indicated by the DNN information.

For another example, when the second request message carries service network identification information of the terminal device, the UPF device selected by the SMF device needs to support a service network indicated by the service network identification information.

Or, the second request message does not carry the information of the target network slice, the DNN information or the service network identification information, then the SMF device may select the UPF device according to a local configuration of the SMF device, and/or subscription information of the terminal device.

For example, when the terminal device supports only one type of network slice, a network slice subscribed in the subscription information of the terminal device is the target network slice applied by the target transmission path. The SMF device can acquire the target network slice according to the subscription information of the terminal device and select the UPF device which supports the target network slice.

Of course, if the SMF device does not agree to serve as the transmission node of the target transmission path, a response message which indicates that the establishment of the target transmission path fails may be sent to the AMF device, and the AMF device sends a response message which indicates that the establishment of the target transmission path fails to the terminal device.

In 307, the SMF device sends a third request message to the UPF device.

The third request message is used for requesting the UPF device to serve as a transmission node of the target transmission path to be established. The third request message is, for example, a registration request requesting registration of a terminal device on the third core network device.

The third request message may, for example, carry at least one of information of a target network slice applied by the target transmission path, DNN information of the terminal device, and service network identification information of the terminal device.

In 308, after receiving the second request message, the UPF device determines whether to serve as the transmission node of the target transmission path.

In 309, if the UPF device determines to serve as the transmission node of the target transmission path, the UPF device sends a response message to the SMF device.

The response message indicates that an establishment of the target transmission path is completed.

In 310, the SMF device sends a response message to the AMF device after receiving the response message sent by the UPF device.

The response message indicates that an establishment of the target transmission path is completed.

In 311, the AMF device sends a response message to the terminal device after receiving the response message sent by the SMF device.

The response message indicates that an establishment of the target transmission path is completed.

In 312, after the AMF device, the SMF device, and the UPF device are determined to serve as the transmission node of the target transmission path, they respectively send registration information of the terminal device on each device to the UDM device.

In 313, after receiving the registration information reported by the AMF device, the SMF device, and the UPF device, the UDM device records each transmission node, i.e. records the AMF device, the SMF device, and the UPF device in the target transmission path, thereby completing the establishment of the target transmission path.

Optionally, the UDM may record target transmission paths for different network slices, target transmission paths of different external servers or external service functions.

At this point, the establishment of the target transmission path is completed.

Of course, in 308, if the UPF device does not agree to serve as the transmission node of the target transmission path, a response message which indicates that the establishment of the target transmission path fails may be sent to the SMF device, and the SMF device sends a response message which indicates that the establishment of the target transmission path fails to the AMF device, and the AMF device sends a response message which indicates that the establishment of the target transmission path fails to the terminal device. Then after receiving the response message, the terminal device may establish another transmission path, e.g., a transmission path based on a PDU session connection, for data transmission.

After the establishment of the target transmission path is completed, when there is downlink data which arrives at the UPF device, the UPF device may acquire the target transmission path applied to the target network slice from the UDM device according to a UE ID of the terminal device and a target network slice corresponding to the downlink data, and send the downlink data to the SMF device in the target transmission path. After receiving the downlink data, the SMF device acquires information of the target transmission path from the UDM device, and sends the downlink data to the AMF device in the target transmission path. After receiving the downlink data, the AMF device pages the terminal device, and after the terminal device responds to the paging, the AMF device packages the downlink data into an ANS PDU and sends the ANS PDU to the terminal device through the access network device.

Therefore, in the embodiment of the present application, a terminal device sends a request message to a core network device to register on different core network devices. The registered core network device serves as a transmission node of the target transmission path, so that the terminal device can still perform data transmission through the target transmission path, i.e. through these registered transmission nodes, in a case that no PDU session connection exists.

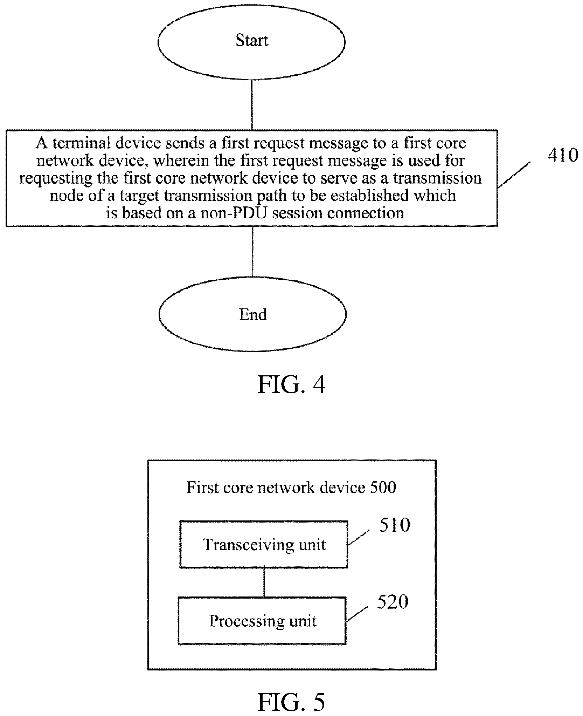

FIG. 4 shows a schematic flow chart of a method 400 for establishing a transmission path according to an embodiment of the present application. The method 400 shown in FIG. 4 may be performed by a terminal device, which may be, for example, the terminal device 120 in FIG. 1. As shown in FIG. 4, the method 400 includes following act S410.

In 410, a terminal device sends a first request message to the first core network device.

The first request message is used for requesting the first core network device to serve as a transmission node of a target transmission path to be established which is based on a non-PDU session connection.

Specifically, when the terminal device needs to establish the target transmission path based on the non-PDU session connection, it may send the first request message to the first core network device, wherein the first request message is used for requesting an establishment of the target transmission path based on the non-PDU session connection and requesting the first core network device to serve as the transmission node of the target transmission path. The first request message may be, for example, a Registration Request message used for requesting registration of a terminal device on the first core network device. A core network device on which the terminal device has been registered may form one transmission path, i.e., the target transmission path, so that data may be transmitted to the terminal device through these registered core network devices.

Optionally, the first request message carries at least one of following pieces of information: information of a target network slice applied by the target transmission path, Data Network Name (DNN) information of the terminal device, and service network identification information of the terminal device.

These pieces of information may be used for the first core network device to determine whether to serve as the transmission node of the target transmission path.

Optionally, the method further includes: the terminal device receives a response message sent by the first core network device, wherein the response message is used for indicating whether the first core network device serves as the transmission node of the target transmission path.

When the first core network device determines that the target transmission path may be established and the first core network device serves as the transmission node of the target transmission path, then it may also continue to find a next transmission node of the target transmission path, for example, the second core network device described in FIG. 2, thereby completing the establishment of the target transmission path.

Optionally, after the establishment of the target transmission path is completed, the terminal device may receive the downlink data sent by the first core network device and transmitted through the target transmission path.

Therefore, a terminal device sends a request message to a core network device to register on different core network devices. The registered core network device serves as a transmission node of the target transmission path, so that the terminal device can still perform data transmission through the target transmission path, i.e. through these registered transmission nodes, in a case that no PDU session connection exists.

It should be understood that in the process of establishing the target transmission path of the method 400, the process performed by the terminal device may specifically refer to the description of the terminal device in FIGs. 2 and 3 described above, which will not be repeated here for the sake of brevity.

It should be understood that in various embodiments of the present application, values of sequence numbers in the aforementioned processes do not indicate an order of execution, and the order of execution of various processes should be determined by their functions and internal logics, and should not constitute any limitation on implementation processes of embodiments of the present application.

The method for establishing the transmission path according to the embodiment of the present application has been described in detail above. An apparatus according to an embodiment of the present application will be described below with reference to FIGs. 5 to 8. Technical features described in the method embodiment are applicable to a following apparatus embodiment.

The following embodiment is not according to the invention and is present for illustration purposes only. FIG. 5 is a schematic block diagram of a core network device 500 according to an embodiment of the present application. As shown in FIG. 5, the core network device 500 is a first core network device, including a transceiving unit 510 and a processing unit 520, wherein: the transceiving unit 510 is configured to receive a first request message, wherein the first request message is used for requesting the first core network device to serve as a transmission node of a target transmission path to be established which is based on a PDU session connection; the processing unit 520 is configured to determine whether to serve as the transmission node of the target transmission path.

Therefore, a terminal device sends a request message to a core network device to register on different core network devices. The registered core network device serves as a transmission node of the target transmission path, so that the terminal device can still perform data transmission through the target transmission path, i.e. through these registered transmission nodes, in a case that no PDU session connection exists.

Optionally, the processing unit 520 is specifically configured to determine to serve as the transmission node of the target transmission path, if the target transmission path satisfies at least one of following conditions: a target network slice applied by the target transmission path is a network slice subscribed by a terminal device, an external server applied by the target transmission path is an external server subscribed by the terminal device, and an external service function applied by the target transmission path is an external service function subscribed by the terminal device.

Optionally, the transceiving unit 510 is further configured to acquire, from a Unified Data Management (UDM) or a Network Slice Selection Function (NSSF), information of a network slice subscribed by the terminal device, information of an external server subscribed by the terminal device, and information of an external service function subscribed by the terminal device.

Optionally, if the first core network device determines to serve as the transmission node of the target transmission path, the processing unit 520 is further configured to: select a second core network device; and the transceiving unit 510 is further configured to: send a second request message to the second core network device, wherein the second request message is used for requesting the second core network device to serve as a transmission node of the target transmission path to be established.

Optionally, the processing unit 520 is specifically configured to: select the second core network device according to the first request message, wherein the first request message carries at least one of following pieces of information: information of a target network slice applied by the target transmission path, Data Network Name (DNN) information of the terminal device, and service network identification information of the terminal device.

Optionally, the processing unit 520 is specifically configured to: select the second core network device according to a local configuration of the first core network device, and/or subscription information of the terminal device.

The subscription information of the terminal device includes at least one of following pieces of information: information of a network slice subscribed by the terminal device, information of an external server subscribed by the terminal device, and information of an external service function subscribed by the terminal device, and the local configuration of the first core network device includes information of a second core network device capable of communicating with the first core network device.

Optionally, the transceiving unit 510 is specifically configured to: receive the first request message sent by the terminal device.

Optionally, the transceiving unit 510 is further configured to: after receiving downlink data transmitted through the target transmission path, send the downlink data to the terminal device.

Optionally, the transceiving unit 510 is specifically configured to: receive the first request message sent by a third core network device.

Optionally, the transceiving unit 510 is further configured to: receive downlink data transmitted through the target transmission path, and send the downlink data to the terminal device through the third core network device.

Optionally, the processing unit 520 is further configured to: acquire information of the third core network device from a UDM device through the transceiving unit 510; or, acquire information of the third core network device stored in the first core network device.

Optionally, the transceiving unit 510 is further configured to: send a response message aiming at the first request message, wherein the response message is used for indicating whether an establishment of the target transmission path is completed.

Optionally, the third core network device is any one of following devices: an Access and Mobility Management Function (AMF) device, a Session Management Function (SMF) device, a User Plane Function (UPF) device, a device provided with an SMF and a UPF in combination, and a gateway connected to an external network element.

Optionally, the second core network device is any one of following devices: an AMF device, an SMF device, a UPF device, a device provided with an SMF and a UPF in combination, and a gateway connected to an external network element.

Optionally, the first core network device is any one of following devices: an AMF device, an SMF device, a UPF device, a device provided with an SMF and a UPF in combination, and a gateway connected to an external network element.

It should be understood that the core network device 500 may perform corresponding operations performed by the first core network device in the above method 200, which will not be repeated herein for the sake of brevity.

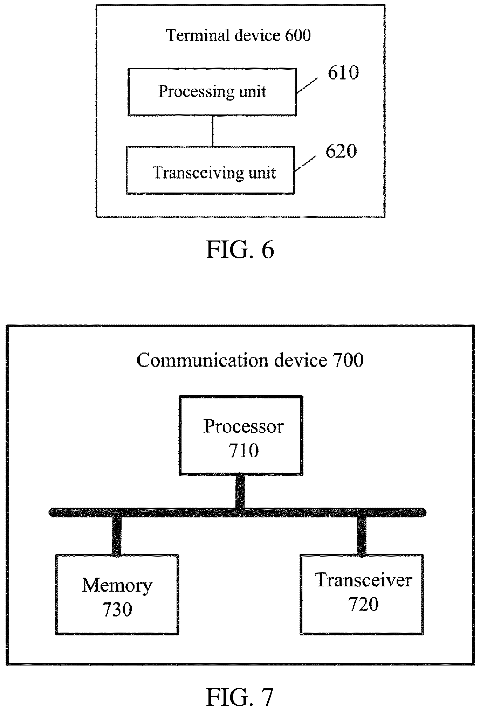

The following embodiment is not according to the invention and is present for illustration purposes only. FIG. 6 is a schematic block diagram of a terminal device 600 according to an embodiment of the present application. As shown in FIG. 6, the terminal device 600 includes a processing unit 610 and a transceiving unit 620, wherein: the processing unit 610 is configured to generate a first request message, wherein the first request message is used for requesting the first core network device to serve as a transmission node of a target transmission path to be established which is based on a non-Protocol Data Unit (non-PDU) session connection.

The transceiving unit 620 is configured to send the first request message generated by the processing unit 610 to the first core network device.

Therefore, a terminal device sends a request message to a core network device to register on different core network devices. The registered core network device serves as a transmission node of the target transmission path, so that the terminal device can still perform data transmission through the target transmission path, i.e. through these registered transmission nodes, in a case that no PDU session connection exists.

Optionally, the first request message carries at least one of following pieces of information: information of a target network slice applied by the target transmission path, Data Network Name (DNN) information of the terminal device, and service network identification information of the terminal device.

Optionally, the transceiving unit 620 is further configured to: receive a response message sent by the first core network device, wherein the response message is used for indicating whether an establishment of the target transmission path is completed.

Optionally, the transceiving unit 620 is further configured to: receive downlink data sent by the first core network device and transmitted through the target transmission path.

Optionally, the first core network device is any one of following devices: an Access and Mobility Management Function (AMF) device, a Session Management Function (SMF) device, a User Plane Function (UPF) device, a device provided with an SMF and a UPF in combination, and a gateway connected to an external network element.

It should be understood that the terminal device 600 may perform corresponding operations performed by the terminal device in the above method 400, which will not be repeated herein for the sake of brevity.

The following embodiment is not according to the invention and is present for illustration purposes only. FIG. 7 is a schematic diagram of structure of a communication device 700 according to an embodiment of the present application. As shown in FIG. 7, the communication device includes a processor 710, a transceiver 720, and a memory 730, wherein the processor 710, the transceiver 720, and the memory 730 communicate with each other through an internal connection path. The memory 730 is used for storing instructions, and the processor 710 is used for executing instructions stored in the memory 730 to control the transceiver 720 to send or receive signals.

Optionally, the processor 710 may call program codes stored in the memory 730 to perform corresponding operations by the first core network device in the method 200, which will not be repeated herein for the sake of brevity.

Optionally, the processor 710 may call program codes stored in the memory 730 to perform corresponding operations performed by the terminal device in the method 400, which will not be described here repeatedly for brevity.

It should be understood that the processor in an embodiment of the present application may be an integrated circuit chip with a capability for processing signals. In the implementation process, the actions of the method embodiments described above may be accomplished by integrated logic circuits of hardware in the processor or instructions in the form of software. The above processor may be a general purpose processor, a digital signal processor (DSP), an application specific integrated circuit (ASIC), a field programmable gate array (FPGA), or other programmable logic device, discrete gate or transistor logic device, or discrete hardware component. The processor may implement various methods, acts and logic block diagrams disclosed in embodiments of the present application. The general purpose processor may be a microprocessor or the processor may be any conventional processor or the like. The actions of the method disclosed in connection with the embodiments of the present application may be directly embodied by the execution of the hardware decoding processor, or by the execution of a combination of hardware and software modules in the decoding processor. The software modules may be located in a storage medium commonly used in the art, such as a random access memory, flash memory, read-only memory, programmable read-only memory or electrically erasable programmable memory, or register. The storage medium is located in the memory, and the processor reads the information in the memory and completes the actions of the above method in combination with its hardware.

It should be understood that the memory in embodiments of the present application may be a transitory memory or non-transitory memory, or may include both transitory and non-transitory memories. The non-transitory memory may be a read-only memory (ROM), programmable ROM (PROM), an erasable programmable ROM (EPROM), an electrically erasable programmable ROM (EEPROM), or a flash memory. The transitory memory may be a random access memory (RAM) which serves as an external cache. As an example, but not as a limitation, many forms of RAMs are available, such as a static random access memory (SRAM), a dynamic random access memory (DRAM), a synchronous dynamic random access memory (SDRAM), a double data rate SDRAM (DDR SDRAM), an enhanced SDRAM (ESDRAM), a Synchlink DRAM (SLDRAM), and a Direct Rambus RAM (DR RAM). It should be noted that the memories of the systems and methods described in the present application are intended to include, but not limited to, these and any other suitable types of memories.

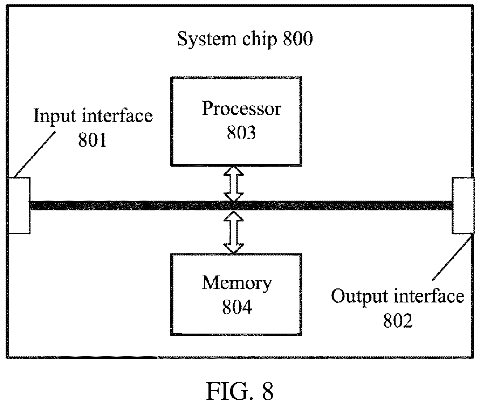

The following embodiment is not according to the invention and is present for illustration purposes only. FIG. 8 is a schematic diagram of structure of a system chip according to an embodiment of the present application. The system chip 800 of FIG. 8 includes an input interface 801, an output interface 802, at least one processor 803, and a memory 804. The input interface 801, the output interface 802, the processor 803, and the memory 804 are connected to each other through an internal connection path. The processor 803 is used for executing codes in the memory 804.

Optionally, when the codes are executed, the processor 1503 may implement corresponding operations performed by the first core network device in the method 200. For the sake of brevity, it will not be repeated here.

Optionally, when the codes are executed, the processor 1503 may implement corresponding operations performed by the terminal device in the method 400. For the sake of brevity, it will not be repeated here.

It should be understood that in the embodiments of the present invention, "B corresponding (corresponding) to A" represents that B is associated with A, and B may be determined according to A. However, it should be further understood that determining B according to A does not mean B is determined according to A only, but B may be determined according to A and/or other information.

Those of ordinary skill in the art will recognize that the example elements and algorithm acts described in connection with the embodiments disclosed herein may be implemented in electronic hardware, or a combination of computer software and electronic hardware. Whether these functions are performed in hardware or software depends on the specific application and design constraints of the technical solution. Skilled artisans may use different methods to implement the described functions in respect to each particular application, but such implementation should not be considered to be beyond the scope of the present application.

Those skilled in the art may clearly understand that for convenience and conciseness of description, corresponding processes in the aforementioned method embodiments may be referred to for the specific working processes of the system, apparatus, and unit described above, which are not repeated here.

In several embodiments provided by the present application, it should be understood that the disclosed system, apparatus and method may be implemented in other ways. For example, the device embodiments described above are only illustrative, for example, the division of the units is only a logical function division, and there may be other division manners in actual implementation, for example, multiple units or components may be combined or integrated into another system, or some features may be ignored or not executed. On the other hand, the mutual coupling or direct coupling or communication connection shown or discussed may be indirect coupling or communication connection through some interface, apparatus or unit, and may be electrical, mechanical or in other forms.

The unit described as a separate component may or may not be physically separated, and the component shown as a unit may or may not be a physical unit, i.e., it may be located in one place or may be distributed over multiple network units. Some or all of the units may be selected according to practical needs to achieve a purpose of the embodiments.

In addition, various functional units in various embodiments of the present application may be integrated in one monitoring unit, or various units may be physically present separately, or two or more units may be integrated in one unit.

The functions may be stored in a computer readable storage medium if implemented in a form of software functional units and sold or used as a separate product. Based on this understanding, the technical solution of the present application, in essence, or the part contributing to the prior art, or the part of the technical solution, may be embodied in the form of a software product stored in a storage medium, including a number of instructions for causing a computer device (which may be a personal computer, a server, or a network device) to perform all or part of the acts of the method described in various embodiments of the present application. The aforementioned storage medium includes various medium capable of storing program codes, such as a U disk, a mobile hard disk, a read-only memory (ROM), a random access memory (RAM), a magnetic disk, or an optical disk.

What are described above are merely example embodiments of the present application, but the protection scope of the present application is not limited thereto. Any variation or substitution that may be easily conceived by a person skilled in the art within the technical scope disclosed by the present application shall be included within the protection scope of the present application. Therefore, the protection scope of the present application shall be the protection scope defined by the claims.

## Claims

1. A method for establishing a transmission path, comprising:
receiving, by a first core network device, a first request message, wherein the first request message is used for requesting the first core network device to serve as a transmission node of a target transmission path to be established which is based on a non-Protocol Data Unit, non-PDU, session connection (S210); and
determining, by the first core network device, whether to serve as the transmission node of the target transmission path (S220); **characterized in that**, wherein receiving, by the first core network device, the first request message, comprises:
receiving, by the first core network device, the first request message sent by a third core network device; wherein the method further comprises:
receiving, by the first core network device, downlink data transmitted through the target transmission path, and sending the downlink data to the terminal device through the third core network device if the first core network device is determined as the transmission node of the target transmission path;
wherein before sending, by the first core network device, the downlink data to the terminal device through the third core network device, the method further comprises:
obtaining, by the first core network device, information of the third core network device from a Unified Data Management, UDM, device; or, obtaining, by the first core network device, information of the third core network device stored in the first core network device; and
determining, by the first core network device, the third core network device according to the information of the third core network device; wherein determining, by the first core network device, whether to serve as the transmission node of the target transmission path, comprises:
if the target transmission path satisfies at least one of following conditions, determining, by the first core network device, to serve as the transmission node of the target transmission path:
an external server applied by the target transmission path is an external server subscribed by the terminal device, and an external service function applied by the target transmission path is an external service function subscribed by the terminal device.

2. The method according to claim 1, wherein the method further comprises:
obtaining, by the first core network device from a Unified Data Management, UDM, information of the external server subscribed by the terminal device, and information of the external service function subscribed by the terminal device.

3. The method according to any one of claims 1 to 2, wherein if determining, by the first core network device, to serve as the transmission node of the target transmission path, the method further comprises:
selecting, by the first core network device, a second core network device; and
sending, by the first core network device, a second request message to the second core network device, wherein the second request message is used for requesting the second core network device to serve as a transmission node of the target transmission path to be established.

4. The method according to claim 3, wherein selecting, by the first core network device, the second core network device, comprises:
selecting, by the first core network device, the second core network device according to the first request message, wherein the first request message carries at least one of: information of a target network slice applied by the target transmission path, Data Network Name, DNN, information of the terminal device, and service network identification information of the terminal device; or;
wherein selecting, by the first core network device, the second core network device, comprises:
selecting, by the first core network device, the second core network device according to a local configuration of the first core network device, and/or subscription information of a terminal device,
wherein, the subscription information of the terminal device comprises at least one of: information of a network slice subscribed by the terminal device, information of an external server subscribed by the terminal device, and information of an external service function subscribed by the terminal device, and the local configuration of the first core network device comprises information of a second core network device capable of communicating with the first core network device.

5. The method according to any one of claims 1 to 4, wherein receiving, by the first core network device, the first request message, comprises:
receiving, by the first core network device, the first request message sent by a terminal device; wherein the method further comprises:
after receiving downlink data transmitted through the target transmission path, sending, by the first core network device, the downlink data to the terminal device.

6. The method according to any one of claims 1 to 5, further comprising:
sending, by the first core network device, a response message aiming at the first request message, wherein the response message is used for indicating whether an establishment of the target transmission path is completed.

7. The method according to claim 1 or 6, wherein the third core network device is any one of:
an Access and Mobility Management Function, AMF, device, a Session Management Function, SMF, device, a User Plane Function, UPF, device, a device provided with an SMF and a UPF in combination, and a gateway connected to an external network element.

8. The method according to any one of claims 3 to 5 or 6 to 7, wherein the second core network device is any one of:
an Access and Mobility Management Function, AMF, device, a Session Management Function, SMF, device, a User Plane Function, UPF, device, a device provided with an SMF and a UPF in combination, and a gateway connected to an external network element; wherein the first core network device is any one of following devices:
an Access and Mobility Management Function, AMF, device, a Session Management Function, SMF, device, a User Plane Function, UPF, device, a device provided with an SMF and a UPF in combination, and a gateway connected to an external network element.

9. A core network device, configured to perform the method according to any one of claims 1-8.

## Patentansprüche

1. Verfahren zum Erstellen eines Übertragungspfades, umfassend:
Empfangen, durch eine erste Kernnetzwerkvorrichtung,
einer ersten Anforderungsnachricht, wobei die erste Anforderungsnachricht dazu verwendet wird, anzufordern,
dass die erste Kernnetzwerkvorrichtung als ein Übertragungsknoten eines zu erstellenden Zielübertragungspfades dient, der auf einer Nicht-Protokolldateneinheit-, Nicht-PDU-, Sitzungsverbindung (S210) basiert; und
Bestimmen, durch die erste Kernnetzwerkvorrichtung, ob sie als der Übertragungsknoten des Zielübertragungspfades (S220) dienen soll; **dadurch gekennzeichnet**, wobei das Empfangen, durch die erste Kernnetzwerkvorrichtung, der ersten Anforderungsnachricht umfasst:
Empfangen, durch die erste Kernnetzwerkvorrichtung, der ersten Anforderungsnachricht, die von einer dritten Kernnetzwerkvorrichtung gesendet wurde; wobei das Verfahren ferner umfasst:
Empfangen, durch die erste Kernnetzwerkvorrichtung, von Downlinkdaten, die durch den Zielübertragungspfad übertragen werden, und Senden der Downlinkdaten an die Endgerätevorrichtung durch die dritte Kernnetzwerkvorrichtung, wenn die erste Kernnetzwerkvorrichtung als der Übertragungsknoten des Zielübertragungspfades bestimmt ist;
wobei vor dem Senden, durch die erste Kernnetzwerkvorrichtung, der Downlinkdaten an die Endgerätevorrichtung durch die dritte Kernnetzwerkvorrichtung, das Verfahren ferner umfasst:
Erhalten, durch die erste Kernnetzwerkvorrichtung, von Informationen der dritten Kernnetzwerkvorrichtung von einer Vorrichtung für einheitliches Datenmanagement, UDM,
(Unified Data Management); oder Erhalten, durch die erste Kernnetzwerkvorrichtung, von Informationen der dritten Kernnetzwerkvorrichtung, die in der ersten Kernnetzwerkvorrichtung gespeichert sind; und
Bestimmen, durch die erste Kernnetzwerkvorrichtung, der dritten Kernnetzwerkvorrichtung gemäß den Informationen der dritten Kernnetzwerkvorrichtung; wobei das Bestimmen,
durch die erste Kernnetzwerkvorrichtung, ob sie als der Übertragungsknoten des Zielnetzwerkpfades dienen soll,
umfasst:
wenn der Zielübertragungspfad mindestens eine der folgenden Bedingungen erfüllt, Bestimmen, durch die erste Kernnetzwerkvorrichtung, als der Übertragungsknoten des Zielübertragungspfades zu dienen:
ein durch den Zielübertragungspfad angewendeter externer Server ein durch die Endgerätevorrichtung subskribierter externer Server ist, und eine durch den Zielübertragungspfad angewendete externe Dienstfunktion eine durch die Endgerätevorrichtung subskribierte externe Dienstfunktion ist.

2. Verfahren nach Anspruch 1, wobei das Verfahren ferner umfasst:
Erhalten, durch die erste Kernnetzwerkvorrichtung von einem einheitlichen Datenmanagement, UDM (Unified Data Management), von Informationen über den von der Endgerätevorrichtung subskribierten externen Server und Informationen über die von der Endgerätevorrichtung subskribierte externe Dienstfunktion.

3. Verfahren nach einem der Ansprüche 1 bis 2, wobei, wenn durch die erste Kernnetzwerkvorrichtung bestimmt wird, als Übertragungsknoten des Zielübertragungspfades zu dienen, das Verfahren ferner umfasst:
Auswählen, durch die erste Kernnetzwerkvorrichtung,
einer zweiten Kernnetzwerkvorrichtung; und
Senden, durch die erste Kernnetzwerkvorrichtung, einer zweiten Anforderungsnachricht an die zweite Kernnetzwerkvorrichtung, wobei die zweite Anforderungsnachricht dazu verwendet wird, anzufordern,
dass die zweite Kernnetzwerkvorrichtung als ein Übertragungsknoten des zu erstellenden Zielübertragungspfades dient.

4. Verfahren nach Anspruch 3, wobei das Auswählen, durch die erste Kernnetzwerkvorrichtung, der zweiten Kernnetzwerkvorrichtung, umfasst:
Auswählen, durch die erste Kernnetzwerkvorrichtung, der zweiten Kernnetzwerkvorrichtung gemäß der ersten Anforderungsnachricht, wobei die erste Anforderungsnachricht trägt: Informationen eines Zielnetzwerk-Slice, die durch den Zielübertragungspfad angewendet wird, und/oder Informationen zum Datennetzwerknamen, DNN, der Endgerätevorrichtung und/oder Informationen zur Identifizierung des Dienstnetzwerks der Endgerätevorrichtung; oder
wobei das Auswählen, durch die erste Kernnetzwerkvorrichtung, der zweiten Kernnetzwerkvorrichtung, umfasst:
Auswählen, durch die erste Kernnetzwerkvorrichtung, der zweiten Kernnetzwerkvorrichtung gemäß einer lokalen Konfiguration der ersten Kernnetzwerkvorrichtung und/oder Subskriptionsinformationen einer Endgerätevorrichtung,
wobei die Subskriptionsinformationen der Endgerätevorrichtung umfassen: Informationen über ein von der Endgerätevorrichtung subskribiertes Netzwerk-Slice und/oder Informationen über einen von der Endgerätevorrichtung subskribierten externen Server und/oder Informationen über eine von der Endgerätevorrichtung subskribierte externe Dienstfunktion, und die lokale Konfiguration der ersten Kernnetzwerkvorrichtung Informationen über eine zweite Kernnetzwerkvorrichtung umfasst, die mit der ersten Kernnetzwerkvorrichtung kommunizieren kann.

5. Verfahren nach einem der Ansprüche 1 bis 4, wobei das Empfangen, durch die erste Kernnetzwerkvorrichtung, der ersten Anforderungsnachricht umfasst:
Empfangen, durch die erste Kernnetzwerkvorrichtung, der ersten von einer Endgerätevorrichtung gesendeten Anforderungsnachricht; wobei das Verfahren ferner umfasst:
nach dem Empfangen von Downlinkdaten, die durch den Zielübertragungspfad übertragen wurden, Senden, durch die erste Kernnetzwerkvorrichtung, der Downlinkdaten an die Endgerätevorrichtung.

6. Verfahren nach einem der Ansprüche 1 bis 5, ferner umfassend:
Senden, durch die erste Kernnetzwerkvorrichtung, einer Antwortnachricht, die auf die erste Anforderungsnachricht abzielt, wobei die Antwortnachricht dazu verwendet wird, anzugeben, ob eine Erstellung des Zielübertragungspfades abgeschlossen ist.

7. Verfahren nach Anspruch 1 oder 6, wobei die dritte Kernnetzwerkvorrichtung eine der folgenden ist:
eine Vorrichtung für die Zugangs- und Mobilitätsverwaltungsfunktion, AMF (Access and Mobility Management Function), eine Vorrichtung für die Sitzungsverwaltungsfunktion, SMF (Session Management Function), eine Vorrichtung für die Benutzerebenenfunktion, UPF (User Plane Function), eine Vorrichtung, die mit einer SMF und einer UPF in Kombination ausgestattet ist, oder ein mit einem externen Netzwerkelement verbundenes Gateway.

8. Verfahren nach einem der Ansprüche 3 bis 5 oder 6 bis 7, wobei die zweite Kernnetzwerkvorrichtung eine der folgenden ist:
eine Vorrichtung für die Zugangs- und Mobilitätsverwaltungsfunktion, AMF (Access and Mobility Management Function), eine Vorrichtung für die Sitzungsverwaltungsfunktion, SMF (Session Management Function), eine Vorrichtung für die Benutzerebenenfunktion, UPF (User Plane Function), eine Vorrichtung, die mit einer SMF und einer UPF in Kombination ausgestattet ist, oder ein mit einem externen Netzwerkelement verbundenes Gateway, wobei die erste Kernnetzwerkvorrichtung eine der folgenden Vorrichtungen ist:
eine Vorrichtung für die Zugangs- und Mobilitätsverwaltungsfunktion, AMF (Access and Mobility Management Function), eine Vorrichtung für die Sitzungsverwaltungsfunktion, SMF (Session Management Function), eine Vorrichtung für die Benutzerebenenfunktion, UPF (User Plane Function), eine Vorrichtung, die mit einer SMF und einer UPF in Kombination ausgestattet ist, oder ein mit einem externen Netzwerkelement verbundenes Gateway.

9. Kernnetzwerkvorrichtung, die dazu ausgelegt ist, das Verfahren nach einem der Ansprüche 1-8 durchzuführen.

## Revendications

1. Procédé pour établir un chemin de transmission, le procédé comprenant les étapes suivantes :
recevoir, par un premier dispositif de réseau central, un premier message de demande, où le premier message de demande est utilisé pour demander au premier dispositif de réseau central de servir de nœud de transmission d'un chemin de transmission cible à établir qui est basé sur une connexion de session (S210) non-PDU, (Unité de Données de Protocole) ; et
déterminer, par le premier dispositif de réseau central, s'il doit servir de nœud de transmission du chemin de transmission cible (S220) ; **caractérisé en ce que**, la réception, par le premier dispositif de réseau central, du premier message de demande, comprend l'étape suivante :
recevoir, par le premier dispositif de réseau central, le premier message de demande envoyé par un troisième dispositif de réseau central, où le procédé comprend en outre l'étape suivante :
recevoir, par le premier dispositif de réseau central, des données de liaison descendante transmises par le chemin de transmission cible, et envoyer les données de liaison descendante au dispositif terminal par le troisième dispositif de réseau central si le premier dispositif de réseau central est déterminé comme étant le nœud de transmission du chemin de transmission cible ;
où avant d'envoyer, par le premier dispositif de réseau central, les données de liaison descendante au dispositif terminal par l'intermédiaire du troisième dispositif de réseau central, le procédé comprend en outre les étapes suivantes :
obtenir, par le premier dispositif de réseau central, des informations sur le troisième dispositif de réseau central à partir d'un dispositif de gestion unifiée de données, UDM ; ou obtenir, par le premier dispositif de réseau central, des informations sur le troisième dispositif de réseau central stockées dans le premier dispositif de réseau central ; et
déterminer, par le premier dispositif de réseau central, le troisième dispositif de réseau central selon les informations du troisième dispositif de réseau central ;
où déterminer, par le premier dispositif de réseau central, s'il faut servir de nœud de transmission du chemin de transmission cible, comprend les étapes suivantes :
si le chemin de transmission cible satisfait à au moins l'une des conditions suivantes, déterminer, par le premier dispositif de réseau central, de servir de nœud de transmission du chemin de transmission cible ;
un serveur externe appliqué par le chemin de transmission cible est un serveur externe souscrit par le dispositif terminal, et une fonction de service externe appliquée par le chemin de transmission cible est une fonction de service externe souscrite par le dispositif terminal.

2. Procédé selon la revendication 1, dans lequel le procédé comprend en outre l'étape suivante :
obtenir, par le premier dispositif de réseau central, à partir d'une gestion unifiée de données, UDM, des informations du serveur externe souscrit par le dispositif terminal, et des informations de la fonction de service externe souscrite par le dispositif terminal.

3. Procédé selon l'une quelconque des revendications 1 et 2, dans lequel si l'on détermine, par le premier dispositif de réseau central, de servir de nœud de transmission du chemin de transmission cible, le procédé comprend en outre les étapes suivantes :
sélectionner, par le premier dispositif de réseau central, un deuxième dispositif de réseau central ; et
envoyer, par le premier dispositif de réseau central, un deuxième message de demande au deuxième dispositif de réseau central, où le deuxième message de demande est utilisé pour demander au deuxième dispositif de réseau central de servir de nœud de transmission du chemin de transmission cible à établir.

4. Procédé selon la revendication 3, dans lequel la sélection, par le premier dispositif de réseau central, du deuxième dispositif de réseau central, comprend l'étape suivante :
sélectionner, par le premier dispositif de réseau central, le deuxième dispositif de réseau central conformément au premier message de demande, où le premier message de demande achemine au moins l'un des éléments suivants : des informations d'une tranche de réseau cible appliquée par le chemin de transmission cible, des informations de nom de réseau de données, DNN, du dispositif terminal, et des informations d'identification de réseau de service du dispositif terminal ; ou
où la sélection, par le premier dispositif de réseau central, du deuxième dispositif de réseau central,
comprend l'étape suivante :
sélectionner, par le premier dispositif de réseau central, le deuxième dispositif de réseau central conformément à une configuration locale du premier dispositif de réseau central, et/ou des informations d'abonnement d'un dispositif terminal,
où les informations d'abonnement du dispositif terminal comprennent au moins l'un des éléments suivants : des informations d'une tranche de réseau souscrite par le dispositif terminal, des informations d'un serveur externe souscrit par le dispositif terminal, et des informations d'une fonction de service externe souscrite par le dispositif terminal, et la configuration locale du premier dispositif de réseau central comprend des informations d'un deuxième dispositif de réseau central capable de communiquer avec le premier dispositif de réseau central.

5. Procédé selon l'une quelconque des revendications 1 à 4, dans lequel la réception, par le premier dispositif de réseau central, du premier message de demande, comprend l'étape suivante :
recevoir, par le premier dispositif de réseau central, le premier message de demande envoyé par un dispositif terminal ; où le procédé comprend en outre l'étape suivante :
après réception des données de liaison descendante transmises par le chemin de transmission cible, envoyer, par le premier dispositif de réseau central, les données de liaison descendante au dispositif terminal.

6. Procédé selon l'une quelconque des revendications 1 à 5, comprenant en outre l'étape suivante :
envoyer, par le premier dispositif de réseau central, un message de réponse visant le premier message de demande, où le message de réponse est utilisé pour indiquer si un établissement du chemin de transmission cible est terminé.

7. Procédé selon la revendication 1 ou la revendication 6, dans lequel le troisième dispositif de réseau central est l'un quelconque des dispositifs suivants :
un dispositif de fonction de gestion d'accès et de mobilité, AMF, un dispositif de fonction de gestion de session, SMF, un dispositif de fonction de plan d'utilisateur, UPF, un dispositif muni d'une combinaison d'une SMF et d'une UPF, et une passerelle connectée à un élément de réseau externe.

8. Procédé selon l'une quelconque des revendications 3 à 5 ou 6 à 7, dans lequel le deuxième dispositif de réseau central est l'un quelconque des dispositifs suivants :
un dispositif de fonction de gestion d'accès et de mobilité, AMF, un dispositif de fonction de gestion de session, SMF, un dispositif de fonction de plan d'utilisateur, UPF, un dispositif muni d'une combinaison d'une SMF et d'une UPF, et une passerelle connectée à un élément de réseau externe ; où le premier dispositif de réseau central est l'un quelconque des dispositifs suivants :
un dispositif de fonction de gestion d'accès et de mobilité, AMF, un dispositif de fonction de gestion de session, SMF, un dispositif de fonction de plan d'utilisateur, UPF, un dispositif muni d'une combinaison d'une SMF et d'une UPF, et une passerelle connectée à un élément de réseau externe.

9. Dispositif de réseau central, configuré pour exécuter le procédé selon l'une quelconque des revendications 1 à 8.
